# EUROPEAN PATENT APPLICATION

(11) **EP 2 455 723 A1**
(43) Date of publication of application: **23.05.2012**
(21) Application number: 10799696.9
(22) Date of filing: 11.06.2010
(51) Int. Cl.: G01D 11/28, B60K 35/00, G01D 13/28

(54) **INDICATING INSTRUMENT**

(30) Priority: 16.07.2009 JP 2009167322; 18.08.2009 JP 2009188897; 30.09.2009 JP 2009225688
(71) Applicant: Nippon Seiki Co., Ltd., Niigata 940-8580 (JP)
(72) Inventor: OKAMOTO, Yoshiyuki, Nagaoka, Niigata (JP); OGASAWARA, Yukio, Nagaoka, Niigata (JP); ISHIZAWA, Kenta, Nagaoka, Niigata (JP); SAITOU, Ryuji, Nagaoka, Niigata (JP)
(74) Representative: Jackson, Richard Eric
(86) International application number: PCT/JP2010/059884
(87) International publication number: WO 2011/007634

(57) **Abstract**

An indicating instrument which is capable of supplying stable power to an light source is provided. The indicating instrument including: a display member 10 having a display portion 13a; a drive unit 40 arranged on the back side of the display member 10; an indicating member 50 mounted on a revolving shaft 30 of the drive unit 40 and includes a base portion 51 located on the periphery of the revolving shaft 30 and an indicating portion 52 indicating the display portion 13a; a light source 57 disposed on the indicating member 50 so as to cause the indicating portion 52 to emit light, the indicating instrument including: a coil 23 provided on the side of the drive unit 40; and a flexible substrate 90 having a coil-type wiring portion 92 provided on the side of the base portion 51 so as to allow electromagnetic induction with the coil 23 and a conducting wiring portion 93 configured to connect the coil-type wiring portion 92 and the light source 57 in electrical conduction, wherein power is supplied to the light source 57 via the conducting wiring portion 93 by an action of electromagnetic induction between the coil 23 and the coil-type wiring portion 92.

## Description

### Technical Field

The present invention relates to an indicating instrument having an indicating portion which rotates at a position anterior to a display member including a dial plate, a liquid crystal display and the like.

### Background Art

In the related art, as an indicating instrument of this type, the one disclosed in Patent Document 1 shown below is known, for example. The indicating instrument described in Patent Document 1 includes a dial plate (display member) having a display portion, a circuit board arranged on the back side of the dial plate, a drive unit mounted on the back side of the circuit board in electrical conduction, and an indicating member mounted on a revolving shaft of the drive unit extending through a hole portion provided on the circuit board toward the dial plate and formed into a substantially angular U-shape so as to bypass the dial plate.

### Cited Reference

### Patent Document

Patent Document 1: International Publication WO2006/5821

In this case, the indicating member includes a base portion having a substantially bar-shaped arm strip mounted on the revolving shaft and disposed between the dial plate and the circuit board so as to avoid the dial plate, and a substantially L-shaped coupling body disposed around a lateral periphery of the dial plate and at a position anterior to the dial plate and coupled to the base portion.

This coupling body is formed of translucent synthetic resin, and includes an indicating portion located at the position anterior to the dial plate so as to indicate the display portion and a coupling portion located around the lateral periphery of the dial plate so as to connect the indicating portion and the base portion, which are integrally formed. The base portion is formed with a through hole at a position corresponding to a lower end portion of the coupling body and the lower end portion of the coupling body is fitted into the through hole, whereby the base portion and the coupling body are connected. Then, a light source is fixed (disposed) on the back surface of the lower end portion of the coupling body.

Such a light source includes a light-emitting body which causes the indicating portion coupled to the base portion via the coupling body to emit light, and illumination light emitted from the light source is guided through the coupling body located right above the light source to the indicting portion, whereby the indicating portion emits light. Also, in the indicating instrument described in Patent Document 1 mentioned above, the light source and the circuit board are connected in electrical conduction via a flexible substrate such as a flexible wiring board in order to supply illumination power to the light source. Then, the flexible substrate is provided so as to wrap around the revolving shaft of the drive unit arranged on the back side of the dial plate in order to follow the rotation of the indicating member (indicating portion), and is provided with a predetermined sag at an intermediate portion thereof.

### Summary of Invention

### Problems to be Solved by the Invention

However, in the indicating instrument described in Patent Document mentioned above, since a state of wrapping of the flexible substrate on the revolving shaft is changed hour by hour, the flexible substrate might be broken in association with change with time in conjunction with the movement of the indicating member (indicating portion). If the flexible substrate is broken, there arises a problem that stable power (the illumination power) cannot be supplied to the power source, and hence it bears further improvements in this point of view.
Accordingly, in order to cope with the problem described above, it is an object of the present invention to provide an indicating instrument which is capable of supplying stable power to a power source.

### Means for Solving the Problems

The present invention provides an indicating instrument including: a display member having a display portion; a drive unit arranged on the back side of the display member; an indicating member mounted on a revolving shaft of the drive unit and includes a base portion located on the periphery of the revolving shaft and an indicating portion indicating the display portion; a light source disposed on the indicating member so as to cause the indicating portion to emit light, the indicating instrument including: a coil provided on the side of the driving unit; and a wiring member having a coil-type wiring portion provided on the side of the base portion so as to allow electromagnetic induction with the coil and a conducting wiring portion configured to connect the coil-type wiring portion and the light source in electrical conduction, wherein power is supplied to the light source via the conducting wiring portion by an action of electromagnetic induction between the coil and the coil-type wiring portion.

The present invention is **characterized in that** the coil-type wiring portion includes a front side coil-type wiring portion and a back side coil-type wiring portion formed on the front and back sides of an insulating substrate as a base material of the wiring member, and the front side coil-type wiring portion and the back side coil-type wiring portion are not opposed to each other with the intermediary of the insulating substrate.

The present invention is **characterized in that** the drive unit is mounted on the back of a circuit board having a predetermined wiring pattern in conduction; and a magnetic body having a peripheral wall portion surrounding the coil located on the circuit board and arranged so that an opening end side thereof is located in proximity to the coil-type wiring portion and a bottom wall portion arranged between the circuit board and the coil is disposed between the circuit board and the base portion.

The present invention is also **characterized in that** the base portion is formed integrally with a bearing portion extending in the direction of an axial line of the revolving shaft so as to bear the revolving shaft; and the wiring member is provided with a fitting portion which allows fitting of the bearing portion.

The present invention is also **characterized in that** the wiring member is provided with a fitting portion which allows fitting of the revolving shaft.

The present invention is also **characterized in that** the wiring member is disposed so as to adhere to the base portion. Advantages of the Invention

According to the present invention, an indicating instrument is able to achieve the initial object and is capable of supplying stable power to a power source. Brief Description of the Drawings

[Fig. 1] Fig. 1 is a front view of an indicating instrument according to a first embodiment of the present invention.
[Fig. 2] Fig. 2 is a cross-sectional view taken along the line A-A in Fig. 1.
[Fig. 3] Fig. 3 is an enlarged cross-sectional view showing a portion B in Fig. 2 in an enlarged scale.
[Fig. 4] Fig. 4(a) is a front view of a principal portion of a wiring member when viewed from the side of a display member according to the same embodiment, and Fig. 4(b) is a back view of the principal portion of the wiring member when viewed from the side of a coil unit according to the same embodiment.
[Fig. 5] Fig. 5 is a cross-sectional view of a principal portion of the indicting instrument according to a second embodiment of the present invention.
[Fig. 6] Fig. 6 is a cross-sectional view of the principal portion of the indicating instrument according to a third embodiment of the present invention.
[Fig. 7] Fig. 7 is a cross-sectional view of the principal portion of the indicating instrument according to a fourth embodiment of the present invention.
[Fig. 8] Fig. 8 is a cross-sectional view of the principal portion of the indicating instrument according to a fifth embodiment of the present invention.
[Fig. 9] Fig. 9 is a drawing showing a fitting state between the wiring member and a revolving shaft according to the fifth embodiment.
[Fig. 10] Fig. 10 is a cross-sectional view of the indicating instrument according to a sixth embodiment of the present invention.
[Fig. 11] Fig. 11 is a cross-sectional view of the indicating instrument according to a seventh embodiment of the present invention.

### Best Modes for Carrying Out the Invention

### (First Embodiment)

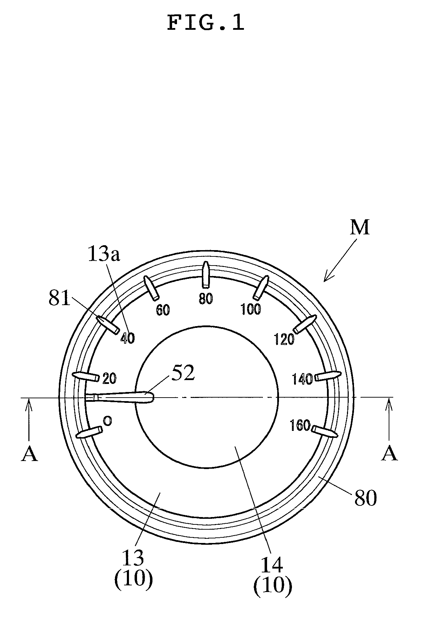

Referring now to Fig. 1 to Fig. 4, an embodiment in which the present invention is applied to an indicating instrument including a speedometer mounted on a vehicle.

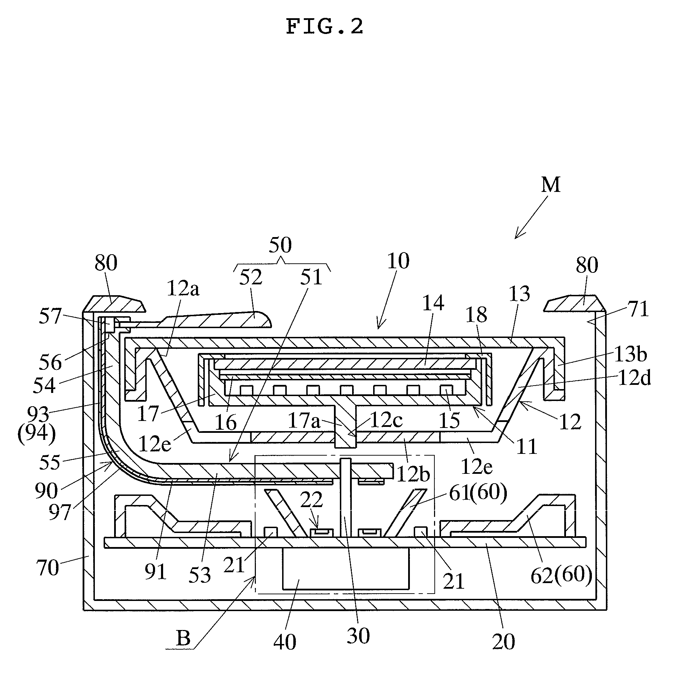

In Fig. 1 and Fig. 2, an indicating instrument M mainly includes the speedometer which indicates the speed of the vehicle, and includes a display member 10, a circuit board 20 to be arranged on the back side of the display member 10, a drive unit 40 mounted on the circuit board 20 in electrical conduction and including a revolving shaft 30 extending toward the display member 10. an indicating member 50 mounted on a distal end of the revolving shaft 30 of the drive unit 40 so as to bypass the display member 10, a flame member 60 to be placed on the circuit board 20, an instrument housing 70 that serves as an outer case of the indicating instrument M, and an end facing member 80 arranged on the instrument housing 70 so as to expose the display member 10 and an indicating portion, described later, of the indicating member 50.

The display member 10 includes a display unit 11, a storage case 12 in which the display unit 11 is accommodated, and a front cover 13 configured to cover an opening window 12a provided on the front surface of the storage case 12, and is fixed to the circuit board 20 by fixing means as needed.

The display unit 11 is configured to display information relating to the vehicle or the like. Examples of information relating to the vehicle include various information such as a route guide, alarm displays relating to the vehicle and an outside temperature.

The display unit 11 includes a dot-matrix-type liquid crystal display element 14 configured to display the various information, plural element power sources 15 configured to illuminate the liquid crystal display element 14 as backlights, an optical member 16 arranged between the liquid crystal display element 14 and the element power sources 15 and includes a diffuser panel or the like to uniform illumination light reaching from the element power sources 15 to the liquid crystal display element 14, a case body 17 configured to accommodate the liquid crystal display element 14, the element power sources 15, and the optical member 16, and a cover 18 configured to cover the periphery of the case body 17 and the peripheral edge of the liquid crystal display element 14 for exposing a display area, not shown, of the liquid crystal display element 14.

Provided at a center portion of the case body 17 on the bottom side is a boss portion 17a projecting toward a bottom wall portion 12b of the storage case 12, and the boss portion 17a fitted into a through hole portion 12c provided on a substantially center portion of the bottom wall portion 12b, so that the display unit 11 is fixed to the storage case 12.

The storage case 12 is formed of a light-shielding synthetic resin, is formed into a bottomed cup shape, and mainly includes the opening window 12a, described above, the bottom wall portion 12b described above corresponding to the opening window 12a, and a side wall portion 12d surrounding the bottom wall portion 12b. The storage case 12 as described above is formed with an opening 12e, which is opening for letting in illumination light from a light-emitting body, described later, over a boundary portion between the bottom wall portion 12b and the side wall portion 12d and the periphery thereof.

The front cover 13 is formed of a translucent synthetic resin, and includes a see-through portion which allows users of the vehicle to view the interior of the display unit 11 or the storage case 12. The front cover 13 in this example has a configuration which also constitutes part of markings on the dial plate of the instrument, and is formed with display portions 13a including numerical values indicating speeds in an area corresponding to an operating range of the indicating portion in a peripheral edge thereof.

The display portions 13a in this example are formed of minute projections and depressions provided on a back surface of the front cover 13, although not shown in detail. Also, in the peripheral edge of the front cover 13 is formed with a wall portion 13b extending downward toward the drive unit 40. The wall portion 13b serves to fix the front cover 13 to the storage case 12, and serves to let in the illumination light from the light-emitting body.

Accordingly, the display portions 13a provided on the front cover 13 is displayed by illumination light introduced into the interior of the storage case 12 through the opening 12e and illumination light introduced from the wall portion 13b of the front cover 13.

The circuit board 20 is formed of a hard circuit board having a wiring pattern (not shown) provided on, for example, a glass epoxy based base material, and light-emitting bodies 21, a coil unit 22 and the flame member 60 are placed on the circuit board 20.

The circuit board 20 includes the light-emitting bodies 21, a coil, described later, provided on the coil unit 22, a drive circuit (not shown) for driving and controlling the drive unit 40, an element drive circuit (not shown) configured to control display of the liquid crystal display element 14, a first light source drive circuit (not shown) configured to control light emission of the element power sources 15, a second light-source drive circuit (not shown) configured to control light emission of the light-emitting bodies 21, and various circuit components (not shown) such as a resistance or a capacitor connected to the wiring pattern in electrical conduction.

The light-emitting bodies 21 are each formed of a light-emitting diode emitting color as needed, and are configured to illuminate the periphery of the display unit 11 and the display portions 13a.

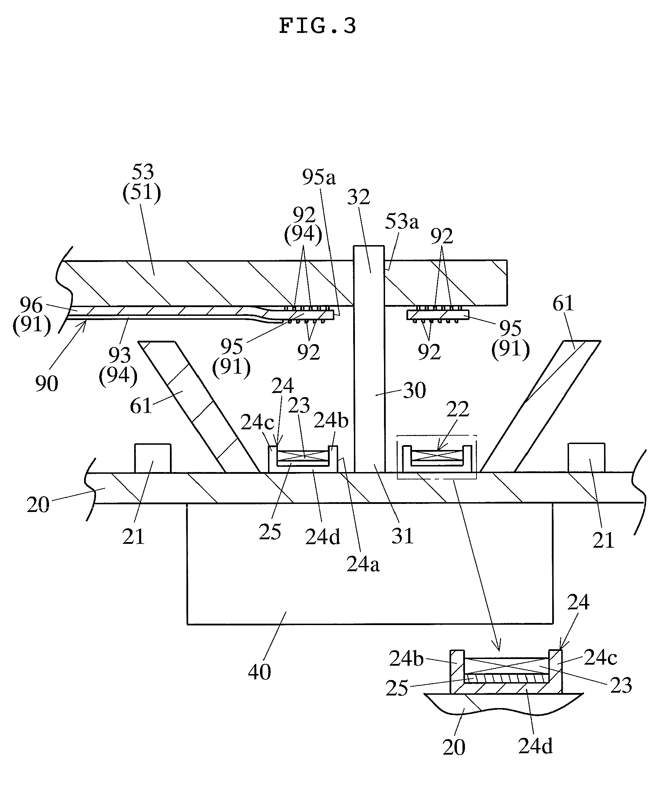

The coil unit 22 includes a coil 23, a frame body 24, and a first magnetic shield member (first magnetic body) 25 as shown in Fig. 3.

The coil 23 is formed of a planar coil (flat coil) formed into a vortical shape in an identical plane, and is provided on the circuit board 20 on the side of the drive unit 40 so as to surround an end portion 31 of the revolving shaft 30 located on the side of the circuit board 20.

The frame body 24 is formed of a substantially annular-shaped plate member having a penetrating portion 24a surrounding the end portion 31 of the revolving shaft 30, and the material thereof is a synthetic resin. The frame body 24 as described above is disposed on the circuit board 20, and includes an inner annular projecting portion 24b, an outer annular projecting portion 24c and a substantially annular plate-shaped annular plate portion 24d connecting the lower end side of the inner annular projecting portion 24b and the lower end side of the outer annular projecting portion 24c.

The inner annular projecting portion 24b projects toward the display member 10 so as to surround the penetrating portion 24a. The outer annular projecting portion 24c is located outside the inner annular projecting portion 24b and projects toward the display member 10 in the same manner as the inner annular projecting portion 24b. The annular plate portion 24d and a portion of the circuit board 20 corresponding thereto are tightly fixed to each other with double-sided tape or the like (not shown), whereby the coil unit 22 (the frame body 24) is brought into a state of being fixed (disposed) on the circuit board 20.

Then, the coil 23 formed of a vortically formed flat coil is embedded in a depressed portion surrounded by the inner annular projecting portion 24b, the outer annular projecting portion 24c, and the annular plate portion 24d. In other words, it means that the coil 23 is in a state of being accommodated in the frame body 24.

The first magnetic shield member 25 is formed, for example, of SPC (cold rolled steel) classified as a soft magnetic body among ferromagnetic bodies, and is formed into an annular shape so as to surround the end portion 31 of the revolving shaft 30, and is accommodated in the frame body 24 so as to be interposed between the coil 23 an the annular plate portion 24d. The first magnetic shield member 25 as described above has a function to block emission of a line of magnetic force to the back side of the coil unit 22, that is, on the side of the circuit board 20.

A configuration in which the first magnetic shield member 25 is formed by, for example, coating a resin film such as a PET film with a ferromagnetic film formed of a ferromagnetic metal thin film instead of the cold rolled steel, although not illustrated, is also applicable. In this case, the first magnetic shield member 25 is arranged in the frame body 24 so that the ferromagnetic film is located on the side of the coil 23.

The drive unit 40 includes a movable magnetic instrument or a stepping motor and is arranged on the back side of the display member 10, a principal portion thereof is mounted on the back side of the circuit board 20 so that the revolving shaft 30 penetrates through the circuit board 20 and extends toward the display member 10, and is connected to the wiring pattern (the drive means) in electrical conduction by conducting means such as soldering as needed.

The indicating member 50 is formed in a substantially angular U-shape, and includes a base portion 51 as a substantially L-shaped arm strip disposed so as to avoid the display member 10, and an indicating portion 52 coupled to the base portion 51 and located anterior to the front cover 13 (the display member 10) so as to indicate the display portion 13a (see Fig. 2).

The base portion 51 is formed of the synthetic resin, and includes integrally a first arm portion 53 extending substantially in parallel with a plate surface of the circuit board 20 and having one end mounted to the revolving shaft 30, and a second arm portion 54 extending toward the end facing member 80 orthogonally to the plate surface from the other end of the first arm portion 53, which is an opposite side from the one end side of the first arm portion 53.

Then, the portion of the first arm portion 53 on the side of the revolving shaft 30 is formed with a substantially circular through hole 53a for allowing a distal end portion 32 of the revolving shaft 30 located on the opposite side from the end portion 31 of the revolving shaft 30 to penetrate therethrough (see Fig. 3). In this example, a curved surface portion 55 is formed in a boundary portion between the first arm portion 53 located in the periphery of the revolving shaft 30 on the back side of the display member 10 and the second arm portion 54 located on the side of the display member 10 so as to connect the first arm portion 53 and the indicating portion 52.

A portion of the second arm portion 54 on the side of the indicating portion 52 is formed with a void portion 56, and a light source 57 is disposed in the void portion 56. The light source 57 includes the light-emitting diode emitting a color as needed, which is a light-emitting body for causing the indicating portion 52 to emit light by supplying illumination light to the indicating portion 52, and is mounted on a flexible substrate 90 (that is, the conducting wiring portion, described later, provided on the flexible substrate 90) so that the light-emitting surface faces toward the indicating portion 52.

The flexible substrate 90, which is a wiring member, is formed of a flexible wiring board including a soft insulating substrate 91 formed of polyimide or the like provided with a wiring portion 94 including a coil-type wiring portion 92 and a conducting wiring portion 93 provided thereon, and is disposed so as to adhere to the base portion 51.

In this case, the insulating substrate 91 which is a base material of the flexible substrate 90 includes a substantially circular insertion hole 95a which allows insertion of the distal end portion 32 of the revolving shaft 30, and is configured to integrally includes a ring-shaped annular portion 95 which is adhered to a bottom surface of the first arm portion 53 so as to oppose the coil unit 22, and a band-shaped portion 96 having a substantially elongated band shape which extends from a portion of the outer peripheral portion of the annular portion 95 toward the light source 57 and adheres to the portion of the bottom surface of the first arm portion 53 other than the area opposing the coil unit 22, an outer peripheral surface of the curved surface portion 55 and an outer peripheral surface of the second arm portion 54.

Then, the annular portion 95 is provided with the coil-type wiring portion 92 so as to correspond to the coil 23 (the coil unit 22), and the band-shaped portion 96 is provided with the conducting wiring portion 93 for connecting the coil-type wiring portion 92 and the light source 57 in electrical conduction.

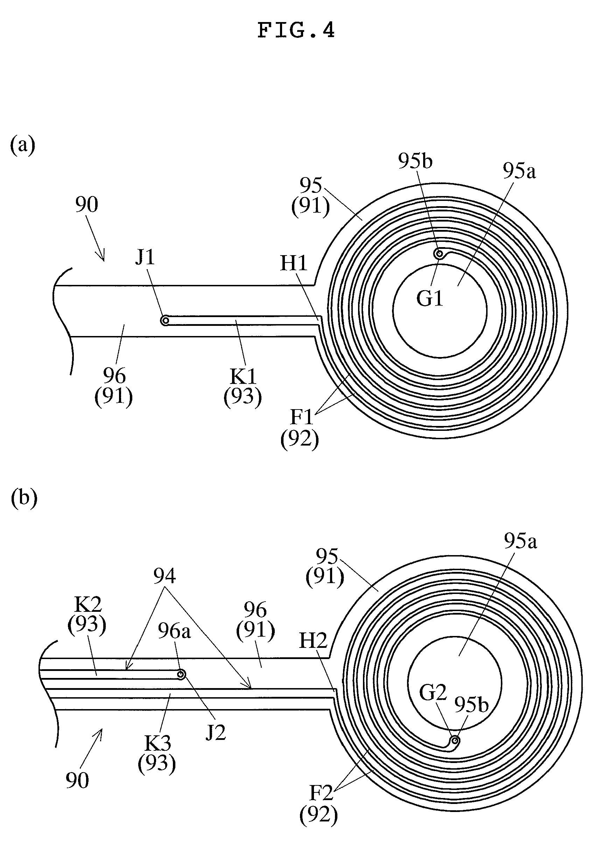

The coil-type wiring portion 92 is provided on the back side of the first arm portion 53 (the base portion 51) so as to allow electromagnetic conduction with the coil 23 and, in the case of this embodiment, each one of those is formed on the front and back sides of the insulating substrate 91, and, includes a front side coil-type wiring portion F1 formed on the front surface of the annular portion 95 (the insulating substrate 91) in a vortical shape as shown in Fig. 4(a), and a back side coil-type wiring portion F2 formed on the back surface of the annular portion 95 (the insulating substrate 91) in a vortical shape as shown in Fig. 4(b).

The front side coil-type wiring portion F1 has a vortical-shaped wiring pattern having one end side G1 thereof located in the vicinity of the insertion hole 95a, which is located inward of the annular portion 95, and the other end side H1 thereof is located in the vicinity of a boundary between the annular portion 95 and the band-shaped portion 96 which is located outward of the annular portion 95. In the same manner, the back side coil-type wiring portion F2 has a vortical shape having one end side G2 thereof located in the vicinity of the insertion hole 95a so that the one end side G2 corresponds to the one end side G1 of the front side coil-type wiring portion F1, and the other end side H2 thereof is located in the vicinity of the boundary portion.

Then, the one end side G1 of the front side coil-type wiring portion F1 and the one end side G2 of the back side coil-type wiring portion F2 are connected via a first through hole 95b, which is a conductive through hole penetrating through the front and back of the annular portion 95 (the insulating substrate 91) in electrical conduction.

In this embodiment, when viewing the annular portion 95 from the side of the coil unit 22, the back side coil-type wiring portion F2 and the front side coil-type wiring portion F1 have a positional relationship (configuration) not overlapping with each other (not opposing to each other) with the intermediary of the annular portion 95 (the insulating substrate 91) as shown in Fig. 3.

Although not illustrated in detail, a second magnetic shield member (second magnetic body) having substantially the same shape as the above-described first magnetic shield member 25 is arranged between the annular portion 95 (the front side coil-type wiring portion F1) and the first arm portion 53. The second magnetic shield member mentioned above is formed into a substantially annular shape so as to surround a portion of the revolving shaft 30 located between the end portion 31 and the distal end portion 32, and has a function to block emission of a line of magnetic force extending from the coil 23 to the coil-type wiring portion 92 toward the first arm portion 53 (on the side of the base portion 51).

In contrast, the conducting wiring portion 93 has a wiring pattern for supplying electric power, described later, to a pair of power supplying terminals (not shown) provided on the light source 57 and each one of the conducting wiring portions 93 is formed on the front and back surfaces of the band-shaped portion 96.

More specifically, the conducting wiring portion 93 includes a line-shaped first wiring pattern K1 formed on the front surface of the band-shaped portion 96 from the other end side H1 of the front side coil-type wiring portion F1 as shown in Fig. 4(a) as a starting point to a first wiring coupling portion J1 located leftward of the other end side H1 in Fig. 4(a) as an end point, a line-shaped second wiring pattern K2 formed on the back surface of the band-shaped portion 96 so as to extend from the portion of the back surface of the band-shaped portion 96 positioned right below the first wiring coupling portion J1 (hereinafter, referred to as a second wiring coupling portion J2) toward the light source 57 as shown in Fig. 4(b), and a third wiring pattern K3 extending from the other end side H2 of the back side coil-type wiring portion F2 toward the light source 57 and formed on the back surface of the band-shaped portion 96 so as to be in parallel to the second wiring pattern K2 also as shown in Fig. 4(b).

Here, the first wiring coupling portion J1 formed on the front surface of the band-shaped portion 96 so as to be located at a substantially center portion of the first arm portion 53 and the second wiring coupling portion J2 formed on the back surface of the band-shaped portion 96 so as to correspond to the first wiring coupling portion J1 are connected through a conductive second through hole 96a penetrating through the front and back sides of the band-shaped portion 96 (the insulating substrate 91) in electrical conduction.

Then, the pair of power supplying terminals provided on the light source 57 are mounted respectively on a first mounting portion, not shown, located on a side opposite from the second wiring coupling portion J2 of the second wiring pattern K2 (that is, the light source 57 side) and a second mounting portion, not shown, located on a side opposite from the above-described other end side H2 of the third wiring pattern K3 arranged aside the first mounting portion.

In this case, a distal end side of the band-shaped portion 96 of the flexible substrate 90, where the second mounting portion is disposed, is bent backward, although not illustrated in detail, and the pair of power supplying terminals are mounted respectively on the bent portions of the first and second mounting portions.

Incidentally, when the power source circuit (not shown) provided on the circuit board 20 is activated, an AC current is supplied to the coil 23 connected to the power source circuit in association with the operation of the power source circuit.

Then, power (the AC current) is transmitted to the coil-type wiring portion 92 formed on the flexible substrate 90 so as to achieve the electromagnetic induction with the coil 23 (the front side coil-type wiring portion F1 and the back side coil-type wiring portion F2) by an action of electromagnetic induction, and the such power is transmitted to the light source 57 connected to the first and second mounting portions in electrical conduction via the coil-type wiring portion 92 (the front side coil-type wiring portion F1, the back side coil-type wiring portion F2) and the conducting wiring portion 93 (the respective wiring patterns K1 to K3). Accordingly, the light source 57 is illuminated and the indicating portion 52 is lit (emits light). In other words, this means that when the AC current is supplied to the coil 23, the power is supplied to the light source 57 via the conducting wiring portion 93 electrically connected to the coil-type wiring portion 92 by the action of the electromagnetic induction between the coil 23 and the coil-type wiring portion 92, and the indicating portion 52 is lit.

Here, it is known that, for example, if the substantially center portion of the flexible substrate 90 is not adhered to the curved surface portion 55 but the flexible substrate 90 is bent at a right angle to form an L-shape at the boundary portion (in other words, if the substantially center portion of the flexible substrate 90 is not adhered to the curved surface portion 55 in the state of Fig. 2 and a corner having an angular shape is formed at the substantially center portion of the flexible substrate 90), when a transmission signal transmitted through the conducting wiring portion 93 as a signal transmitting line (that is, an alternating waveform signal which is the AC current) is transmitted from the portion of the conducting wiring portion 93 corresponding to the first arm portion 53 to the portion of the conducting wiring portion 93 corresponding to the second arm portion 54 via the corner, the value of a characteristic impedance of the transmission signal is discontinued at the corner.

At the discontinuous point of the characteristic impedance of the transmission signal as described above, if the transmission signal is reflected from the corner to the respective portions of the conducting wiring portion 93 located on the side of the first arm portion 53 as reflected transmission signals, and hence the transmission signal and the reflected transmission signals proceeding from the portion of the conducting wiring portion 93 located on the first arm portion 53 side toward the corner are combined while enhancing each other so as to have a waveform distortion, unnecessary electromagnetic wave (noise) is radiated from the portion of the conducting wiring portion 93 located on the side of the first arm portion 53. Also, in association with the reflection of the transmission signal, the transmission signal can hardly be transmitted to the portion of the conducting wiring portion 93 located on the side of the second arm portion 54 (that is the light source 57 side).

However, in this embodiment, the substantially center portion of the flexible substrate 90 is not formed into the corner having the discontinuous point of the characteristic impedance, but a curved conducting wiring portion 97 adhering to the outer peripheral surface of the curved surface portion 55 is formed in order to substantially match the value of the characteristic impedance of the transmission signal at the portion of the conducting wiring portion 93 located on the first arm portion 53 side and the value of the characteristic impedance of the transmission signal at the portion of the conducting wiring portion 93 formed into a curved shape so as to follow the curved surface portion 55.

Accordingly, when the characteristic impedances of three portions, namely, the conducting wiring portion 93 located on the side of the first arm portion 53, the curved conducting wiring portion 97, and the conducting wiring portion 93 located on the side of the arm portion 54 are substantially matched, generation of the reflected transmission signals which has been a cause of generation of the radiation noise described above is inhibited. Furthermore, when the generation of the reflected transmission signal is inhibited, the transmission signals is satisfactorily transferred from the coil-type wiring portion 92 to the light source 57, stable power is supplied to the light source 57 correspondingly.

Also, the indicating portion 52 which rotates over the front cover 13 by being driven by the drive unit 40 is formed of a substantially elongated rod-shaped translucent synthetic resin, is coupled and fixed to the base portion 51 (the second arm portion 54), and includes the display portions 13a and a marking portion which indicates calibration markings described later.

The flame member 60 is formed of a white synthetic resin, and includes functions as a reflecting member which reflects illumination light from the light-emitting body 21 efficiently toward the display member 10. The flame member 60 includes a first reflecting surface 61 having an inclined shape opposing the light-emitting body 21 so as to reflect the illumination light emitted from the light-emitting body 21 outward (toward the outer periphery) and a second reflecting wall 62 located on the outside of the first reflecting surface 61 and configured to reflect the illumination light reflected toward the outer periphery toward the display member 10 (toward the opening 12e) .

The instrument housing 70 is formed of a light-shielding synthetic resin, is formed into a bottomed cup shape, and configured to accommodate components of the indicating instrument M such as the display member 10, the circuit board 20, the revolving shaft 30, the drive unit 40, the indicating member 50, the flame member 60 respectively in the interior thereof.

The end facing member 80 is formed of a substantially annular-shaped light-shielding synthetic resin, and is placed on the instrument housing 70 so as to cover the peripheral edge of a front opening 71 of the instrument housing 70. The end facing member 80 is formed with calibration markings 81 corresponding to the display portions 13a. The individual calibration markings 81 in this example are formed into a substantially elongated rod shape, and are provided in an area from a substantially center portion of the end facing member 80 to the peripheral edge of the front cover 13.

As described above, the indicating instrument M including the display member 10 having the display portions 13a, the drive unit 40 arranged on the back side of the display member 10, the indicating member 50 mounted on the revolving shaft 30 of the drive unit 40 and having the base portion 51 located on the periphery of the revolving shaft 30 and the indicating portion 52 indicating the display portions 13a, and the light source 57 disposed on the second arm portion 54 of the indicating member 50 so as to cause the indicating portion 52 to emit light in this embodiment, includes the coil 23 provided on the side of the circuit board 20 (the side of the drive unit 40) and the flexible substrate 90 having the conducting wiring portion 93 which connects the coil-type wiring portion 92, the coil-type wiring portion 92, and the light source 57 provided on the side of the base portion 51 in conductive connection so as to allow electromagnetic induction with the coil 23, and power is supplied to the light source 57 via the conducting wiring portion 93 by the action of the electromagnetic conduction between the coil 23 and the coil-type wiring portion 92. The flexible substrate 90 is fixed (disposed) so as to be adhered to the base portion 51.

Therefore, since the configuration in which the power supply is performed to the light source 57 via the conducting wiring portion 93 tightly fixed to the base portion 51 so as to achieve the conductive connection with the coil-type wiring portion 92 by using the action of electromagnetic induction between the coil 23 and the coil-type wiring portion 92 tightly fixed to the base portion 51 is employed instead of the configuration in which the flexible substrate is wrapped around the revolving shaft of the drive unit and the state of wrapping of the flexible substrate on the revolving shaft is changed hour by hour in conjunction with the movement (rotation)of the indicating member (indicating portion) as in the related art, the probability of breakage of the flexible substrate 90 is eliminated. Accordingly, the indicating instrument which is capable of supplying stable power to the light source 57 can be provided.

Also, in this embodiment, since the configuration in which the coil-type wiring portion 92 includes the front side coil-type wiring portion F1 and the back side coil-type wiring portion F2 formed on the front and back surfaces of the annular portion 95 (the insulating substrate 91 which is the base material of the flexible substrate 90), and the front side coil-type wiring portion F1 and the back side coil-type wiring portion F2 do not oppose each other with the intermediary of the annular portion 95 (the insulating substrate 91) is employed, the power generated in association with the action of the electromagnetic induction can be received not only by the back side coil-type wiring portion F2, which is closer to the coil 23, but also by the front side coil-type wiring portion F1 which is rather farther from the coil 23 than the back side coil-type wiring portion F2, and hence the efficient transmission of the power generated by the action of the electromagnetic induction to the coil-type wiring portion 92 is achieved.

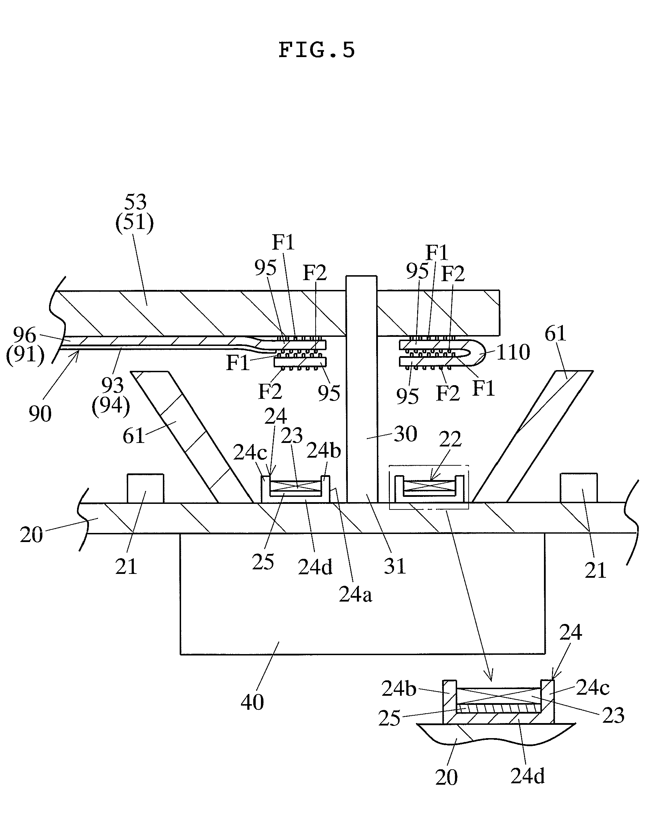

Also, in this embodiment, the example in which the front side coil-type wiring portion F1 and the back side coil-type wiring portion F2 are formed respectively on the front and back surfaces of the single annular portion 95 has been described. However, the similar effects and advantages to the first embodiment are achieved also with a configuration in which two (plural) of the annular portions 95 are superimposed and adhered to each other as shown in Fig. 5 and the front side coil-type wiring portion F1 and the back side coil-type wiring portion F2 are provided respectively on the respective annular portions 95 as a second embodiment of the present invention, for example.

In this case, the annular portions 95 are coupled with each other via a substantially U-shaped coupling portion 110 and, although not illustrated in detail, it is necessary to connect the four coli-type wiring patterns of the front side coil-type wiring portion F1 and the back side coil-type wiring portion F2 provided on the front and rear surfaces of the annular portion 95 located on the upper side in Fig. 5 and the front side coil-type wiring portion F1 and the back side coil-type wiring portion F2 provided on the front and rear surfaces of the annular portion 95 located on the lower side in Fig. 5 in electrical conduction using a predetermined conductively connecting means.

### (Third Embodiment)

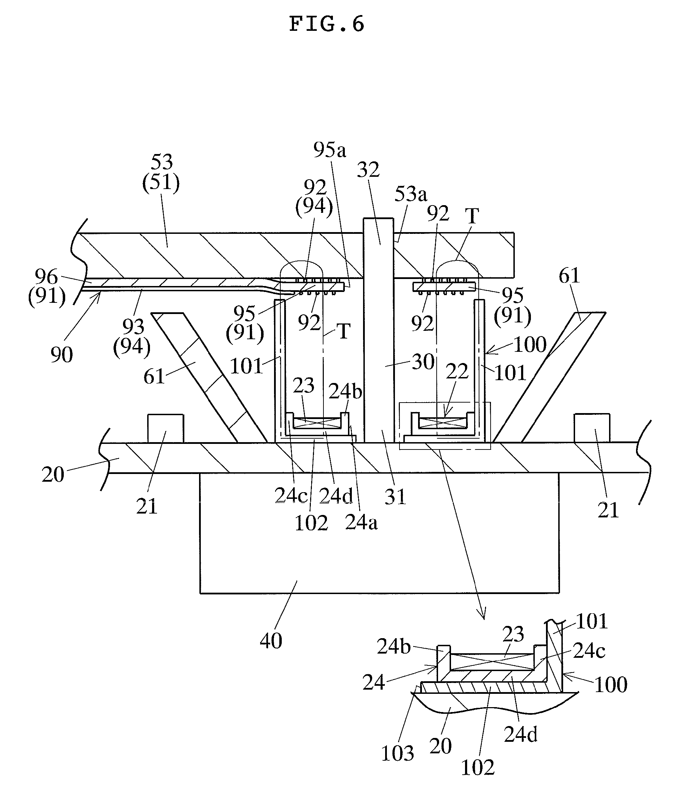

Referring now to Fig. 6, a third embodiment of the present invention will be described. The same or corresponding portions as or to the first and second embodiments described above, however, are denoted by the same reference numerals and detailed description thereof is omitted. In the third embodiment, the first magnetic shield member 25 and the second magnetic shield member employed in the first embodiment are eliminated and the magnetic body (third magnetic body) 100 formed of a ferromagnetic material is disposed between the circuit board 20 and the first arm portion 53 (the base portion 51) on the basis of the configuration of the first embodiment.

The magnetic body 100 in this case is formed into a substantially cylindrical cup shape, and is integrally formed with a cylindrical peripheral wall portion 101 provided so as to surround the coil unit 22 (the coil 23) located on the circuit board 20 and a bottom wall portion 102 formed so as to cover the opening on the lower end side of the peripheral wall portion 101, and the bottom wall portion 102 is formed with a penetrating portion 103, which is a substantially circular through hole which allows passage of the end portion 31 of the revolving shaft 30 therethrough at the substantially center portion thereof.

A lower end side of the peripheral wall portion 101 surrounds the coil unit 22 (the coil 23), and an opening end side, which is a distal end side thereof, extends toward the first arm portion 53, and is arranged in the proximity of the flexible substrate 90 (the coil-shaped wiring portion 92) so as not allow part of the line of magnetic force, describe alter, to leak to the outside (in the periphery of the magnetic body 100).

In other words, in this case, a minute clearance on the order of several millimeters is formed between the distal end side of the peripheral wall portion 101 and the flexible substrate 90 so as to allow the indicating member 50 to rotate smoothly. This state means that the distal end side of the peripheral wall portion 101 is arranged in the proximity of the flexible substrate 90.

In contrast, the annular-shaped bottom wall portion 102 formed with the penetrating portion 103 at the substantially center portion is arranged between the circuit board 20 and the frame body 24 (the coil 23) as shown in Fig. 6 and, in this case, the coil 23 is located above the bottom wall portion 102, and the circuit board 20 is located below the bottom wall portion 102. In the case of the third embodiment, since the bottom wall portion 102 is placed (disposed) on the circuit board 20 via an insulating resin (insulating member), not shown, the circuit board 20 and the magnetic body 100 are brought into a state of being electrically insulated from each other by the insulating resin.

According to the third embodiment as described above, the substantially cylindrical cup-shaped magnetic body 100 is disposed between the circuit board 20 and the first arm portion 53 (the base portion 51), and the substantially cylindrical cup-shaped magnetic body 100 includes the cylindrical peripheral wall portion 101 surrounding the coil 23 located on the circuit board 20 and arranged so that the distal end side thereof is located in the vicinity of the coil-type wiring portion 92, and the bottom wall portion 102 arranged between the circuit board 20 and the coil 23 so as to cover the opening of the peripheral wall portion 101 on the lower end side thereof.

Therefore, part of the line of magnetic force emitted from the coil 23 in association with the action of the electromagnetic induction forms a pair of substantially looped closed magnetic paths T as shown in chain line in Fig. 6 each passing in sequence from the coil 23, the coil-type wiring portion 92, the distal end side of the peripheral wall portion 101, the lower end side of the peripheral wall portion 101, the bottom wall portion 102, to the coil 23. Therefore, part of the line of magnetic force is prevented from leaking to the periphery of the magnetic body 100, whereby the similar effects and advantages to those in the first embodiment are achieved and erroneous operation of the respective circuits (including the drive circuit and the element drive circuit, the light source drive circuit or the like) provided on the circuit board 20 can be prevented.

### (Fourth Embodiment)

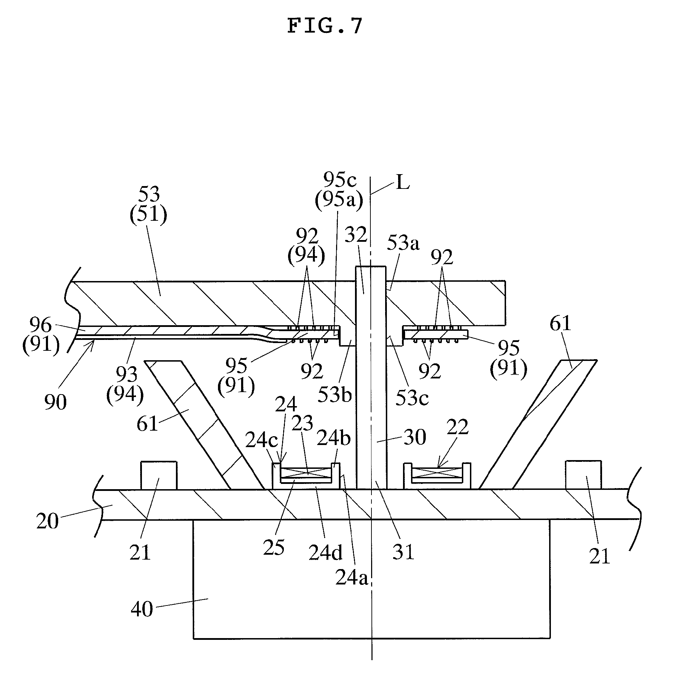

Referring now to Fig. 7, a fourth embodiment of the present invention will be described. The same or corresponding portions as or to the first to the third embodiments described above, however, are denoted by the same reference numerals and detailed description thereof is omitted. In the fourth embodiment, on the basis of the configuration of the first embodiment as a base configuration, a substantially cylindrical-shaped bearing portion 53b extending in the direction of an axial line L of the revolving shaft 30 is integrally formed with the first arm portion 53 (the base portion 51) so as to bear the portion of the revolving shaft 30 located rather below the distal end portion 32 and a fitting portion 95c formed of a substantially circular through hole which allows fitting of the bearing portion 53b therethrough is provided on the annular portion 95 of the flexible substrate 90.

In this case, the fitting portion 95c has the substantially same shape as the insertion hole 95a formed of a substantially circular through hole formed so as to open at a center portion of the coil-type wiring portion 92 employed in the first embodiment. In contrast, the cylindrical bearing portion 53b is formed on the back side of the first arm portion 53 so as to project therefrom and includes a hole portion 53c formed of an insertion hole which allows insertion of the revolving shaft 30, and the hole portion 53c is formed so as to extend along the axial lien L of the revolving shaft 30, and communicates with the through hole 53a of the first arm portion 53 through which the distal end portion 32 of the revolving shaft 30 is inserted.

In this manner, in the fourth embodiment, the through hole 53a provided on the first arm portion 53 bears the distal end portion 32 of the revolving shaft 30 and, simultaneously, the hole portion 53c of the bearing portion 53b bears the portion of the revolving shaft 30 located rather below the distal end portion 32. In addition, an outer peripheral portion of the cylindrical bearing portion 53b fits the fitting portion 95c formed of a circular through hole formed so as to open at a center portion of the annular portion 95 of the flexible substrate 90.

According to the fourth embodiment, the first arm portion 53 (the base portion 51) is formed integrally with the cylindrical bearing portion 53b extending in the direction of the axial line L of the revolving shaft 30 so as to bear the revolving shaft 30, and the annular portion 95 of the flexible substrate 90 as the wiring member is provided with the fitting portion 95c formed of a substantially circular through hole which allows fitting of the cylindrical bearing portion 53b. Therefore, not only the similar effects and advantages as those in the first embodiment, but also the effects and advantages in that the flexible substrate 90 and the base portion 51 of the indicating member 50 can be assembled easily are achieved.

### (Fifth Embodiment)

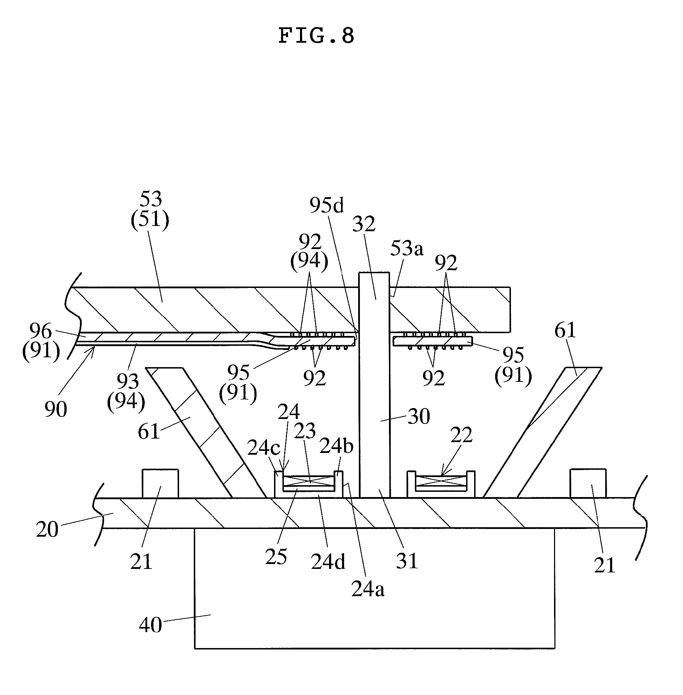

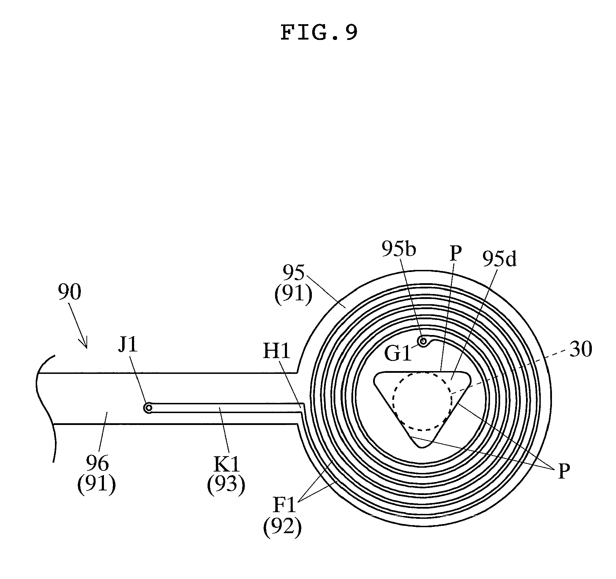

Referring now to Fig. 8 and Fig. 9, a fifth embodiment of the present invention will be described. The same or corresponding portions as or to the first to the fourth embodiments described above, however, are denoted by the same reference numerals and detailed description thereof is omitted. In the fifth embodiment, the bearing portion 53b is eliminated, and the annular portion 95 of the flexible substrate 90 as the wiring member is provided with a fitting portion 95d formed of a through hole which allows fitting of the revolving shaft 30 therethrough on the basis of the configuration of the fourth embodiment as a basic configuration.

In this case, the fitting portion 95d is formed of a substantially inverted triangular through hole formed so as to open at the center portion of the coil-type wiring portion 92 as shown in Fig. 9, for example. Then, the revolving shaft 30 is fitted to the fitting portion 95d formed of the substantially inverted triangular through hole formed so as to open at the center portion of the annular portion 95 of the flexible substrate 90 in a state in which the outer peripheral portion of the revolving shaft 30 abuts against a substantially center portions of three sides P, which constitute the fitting portion 95d having the substantially inverted triangular shape respectively.

According to the fifth embodiment as well, since the annular portion 95 of the flexible substrate 90 is provided with the fitting portion 95d having a substantially triangular shape which allows fitting of the revolving shaft 30, not only the similar effects and advantages as those in the first embodiment, but also the effects and advantages in that the flexible substrate 90 and the base portion 51 of the indicating member 50 can be assembled easily are achieved.

In the fifth embodiment, since the case where the fitting portion 95d is formed into the substantially triangular shape has been described, for example, any shape may be employed as the shape of the fitting portion 95d as long as the revolving shaft 30 can be fitted and, for example, the shape of the fitting portion 95d may be polygonal shapes or oval shapes, or may be a perfect circle in the same manner as the fourth embodiment.

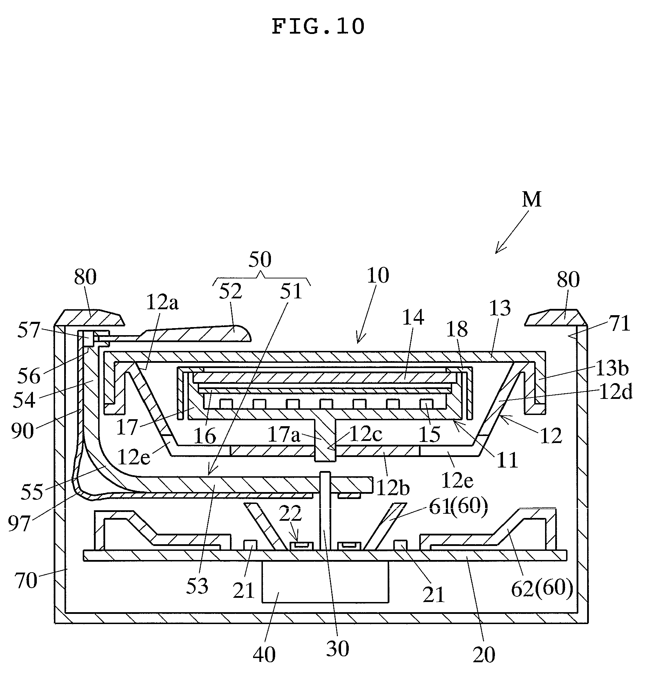

In the respective embodiments described above, the example in which the curved conducting wiring portion 97 which adheres to the outer peripheral surface of the curved surface portion 55 at the substantially center portion of the flexible substrate 90 so as to inhibit unnecessary radiation of electromagnetic wave from the signal transmission line of the conducting wiring portion 93 located on the side of the first arm portion 53 has been described. However, generation of radiation of the electromagnetic wave can be inhibited even when the curved conducting wiring portion 97 is not adhered to the curved surface portion 55, but the curved conducting wiring portion 97 is sagged so as to cause the curved conducting wiring portion 97 to be located apart from the curved surface portion 55, for example, as shown in Fig. 10 as a sixth embodiment of the present invention.

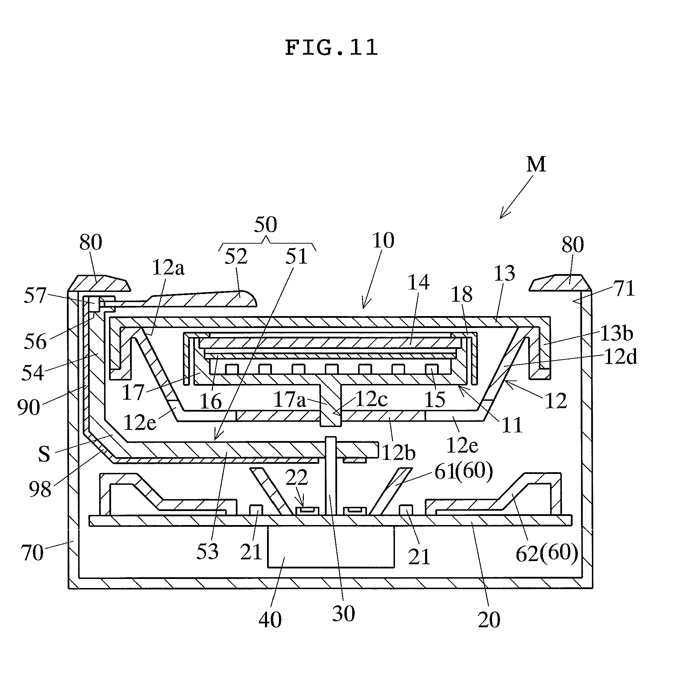

In the embodiments described above, the example in which the curved surface portion 55 is formed on the base portion 51 in the boundary portion between the first arm portion 53 and the second arm portion 54 has been described. However, when an inclined wall S having an inclined shape is employed for the boundary portion between the first arm portion 53 and the second arm portion 54 instead of the curved surface portion 55, for example, as shown in Fig. 11 as a seventh embodiment of the present invention, a inclined conducting wiring portion 98 which brings the substantially center portion of the flexible substrate 90 adherence to the inclined surface S, or may be sagged as illustrated in Fig. 10, described above in order to inhibit generation of the radiation of the electromagnetic wave.

In the present invention, the example in which the indicating member 50 is mounted on the revolving shaft 30 of the drive unit 40 so as to avoid (bypass) the display member 10 has been described. However, although not illustrated in detail, for example, it is also possible to employ an indicating member which is coupled to the revolving shaft (the distal end portion of the revolving shaft) via the through hole provided on the display member, extends linearly on the display member, and is covered with a light-shielding cover at the proximal portion thereof instead of the indicating member 50 employed in the respective embodiments described above.

### Industrial Applicability

The present invention may be applied to the indicating instrument including the display member having the display portion and the indicating member rotating on the display member to indicate the display portion.

### Reference Numerals

- 10: display member
- 13: front cover
- 13a: display portion
- 20: circuit board
- 22: coil unit
- 23: coil
- 30: revolving shaft
- 40: drive unit
- 50: indicating member
- 51: base portion
- 52: indicating portion
- 53: first arm portion
- 53b: bearing portion
- 53c: hole portion
- 54: second arm portion
- 57: light source
- 80: end facing member
- 81: calibration markings
- 90: flexible substrate (wiring member)
- 91: insulating substrate
- 92: coil-type wiring portion
- 93: conducting wiring portion
- 94: wiring portion
- 95: annular portion
- 95a: insertion hole
- 95b: first through hole (through hole)
- 95c, 95d: fitting portion
- 96: band-shaped portion
- 96a: second through hole
- 97: curved conducting wiring portion
- 100: magnetic body
- 101: peripheral wall portion
- 102: bottom wall portion
- F1: front side coil-type wiring portion
- F2: back side coil-type wiring portion
- K1: first wiring pattern
- K2: second wiring pattern
- K3: third wiring pattern
- L: axial line

## Claims

1. An indicating instrument comprising:
a display member having a display portion;
a drive unit arranged on the back side of the display member;
an indicating member mounted on a revolving shaft of the drive unit and includes a base portion located on the periphery of the revolving shaft and an indicating portion indicating the display portion;
a light source disposed on the indicating member so as to cause the indicating portion to emit light, the indicating instrument comprising:
a coil provided on the side of the drive unit; and
a wiring member having a coil-type wiring portion provided on the side of the base portion so as to allow electromagnetic induction with the coil and a conducting wiring portion configured to connect the coil-type wiring portion and the light source in electrical conduction,
wherein power is supplied to the light source via the conducting wiring portion by an action of electromagnetic induction between the coil and the coil-type wiring portion.

2. The indicating instrument according to claim 1, wherein the coil-type wiring portion includes a front side coil-type wiring portion and a back side coil-type wiring portion formed on the front and rear sides of an insulating substrate as a base material of the wiring member, and the front side coil-type wiring portion and the back side coil-type wiring portion are not oppose to each other with the intermediary of the insulating substrate.

3. The indicating instrument according to claim 1, wherein the drive unit is mounted on the back of a circuit board having a predetermined wiring pattern in conduction; and
a magnetic body having a peripheral wall portion surrounding the coil located on the circuit board and arranged so that the opening end side thereof is located in proximity to the coil-type wiring portion and a bottom wall portion arranged between the circuit board and the coil is disposed between the circuit board and the base portion.

4. The indicating instrument according to claim 1, wherein the base portion is formed integrally with a bearing portion extending in the direction of an axial line of the revolving shaft so as to bear the revolving shaft; and
the wiring member is provided with a fitting portion which allows fitting of the bearing portion.

5. The indicating instrument according to claim 1, wherein the wiring member is provided with a fitting portion which allows fitting of the revolving shaft.

6. The indicating instrument according to claim 1, wherein the wiring member is disposed so as to adhere to the base portion.
